Europäisches Patentamt

European Patent Office

Office européen des brevets

(19)

(11) EP 0 770 282 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(21) Anmeldenummer: **95923181.2**

(22) Anmeldetag: **28.06.1995**

(51) Int Cl.⁶: **H02P 21/00**, H02M 5/27

(86) Internationale Anmeldenummer:
**PCT/DE95/00835**

(87) Internationale Veröffentlichungsnummer:
**WO 96/02085 (25.01.1996 Gazette 1996/05)**

(54) **DIREKTUMRICHTER**

DIRECT A.C. CONVERTER

CONVERTISSEUR DIRECT DE COURANT ALTERNATIF

(84) Benannte Vertragsstaaten:
**DE FR GB SE**

(30) Priorität: **11.07.1994 DE 4424082**

(43) Veröffentlichungstag der Anmeldung:
**02.05.1997 Patentblatt 1997/18**

(73) Patentinhaber: **SIEMENS AKTIENGESELLSCHAFT 80333 München (DE)**

(72) Erfinder:
• **KLUG, Rolf-Dieter D-90427 Nürnberg (DE)**
• **TIMMERT, Hans-Peter D-91341 Röttenbach (DE)**

(56) Entgegenhaltungen:
**US-A- 4 713 745**

• **PROCEEDINGS OF THE INDUSTRY APPLICATIONS SOCIETY ANNUAL MEETING, DEARBORN, SEPT. 28 - OCT. 1, 1991, Bd. 2, 28.September 1991 INSTITUTE OF ELECTRICAL AND ELECTRONICS ENGINEERS, Seiten 1134-1140, XP 000299561 HAGMANN R 'AC-CYCLOCONVERTER DRIVES FOR COLD AND HOT ROLLING MILL APPLICATIONS'**

**Beschreibung**

Die Erfindung betrifft einen Direktumrichter mit drei Umrichtereingängen für eine dreiphasige Versorgungsspannung und mit Umrichterausgängen, an denen eine dreiphasige Last, insbesondere ein Motor, in offener Schaltung angeschlossen ist, wobei die Umrichterausgange nur über die Last miteinander verbunden sind, und mit einer den Direktumrichter steuernden Steuereinrichtung zur Einstellung vorgegebener Strangspannungsverläufe an den einzelnen Lastphasen.

Bei einem derartigen, aus B.R. Pelly: "Thyristor Phase-Controlled Converters and Cycloconverters", Wiley-Interscience, 1971, S. 213, bekannten Direktumrichter sind die einzelnen Lastphasen einer dreiphasigen Last voneinander galvanisch getrennt an den Umrichterausgängen des Direktumrichters angeschlossen. Diese sogenannte offene Schaltung bietet im Vergleich zu sogenannten verketteten Schaltungen, bei denen einige der Umrichterausgänge galvanisch in einem Sternpunkt miteinander verbunden sind, den Vorteil, daß wegen der nicht vorhandenen unmittelbaren Verbindung der Umrichterausgange ein einfacher Dreiphasen-Transformator zur Stromversorgung des Direktumrichters ausreicht. Demgegenüber wird, wie Seite 214 der obengenannten Literaturangabe zeigt, bei der sogenannten verketteten Schaltung ein aufwendiger Transformator mit drei dreiphasigen Sekundärwicklungssystemen zur Stromversorgung des Direktumrichters mit der daran angeschlossenen Last benötigt.

Wegen anderer Nachteile haben jedoch Direktumrichter mit offener Schaltung der Last bisher keine große wirtschaftliche Bedeutung. Während nämlich bei Direktumrichtern mit verketteter Schaltung üblicherweise durch Einstellung von angenähert trapezförmigen Strangspannungsverläufen der Transformator bestmöglich ausgelastet wird und sinusförmige Verlaufe der verketteten Spannungen an der Last und damit sinusförmige Lastströme erzeugt werden, würden bei Direktumrichtern mit offener Schaltung die Einstellung trapezförmiger Strangspannungsverläufe starke gleichphasige Oberwellenströme insbesondere der dritten Harmonischen auftreten, die zur Nutzleistung in der Last nichts beitragen, aber zu einer unnötigen zusätzlichen Belastung des Direktumrichters führen. Daher werden bei Direktumrichtern mit offener Schaltung die Strangspannungen üblicherweise sinusförmig gesteuert, wodurch jedoch der Ausnutzungsgrad des Transformators relativ schlecht ist. Um eine Nutzleistungsabgabe zu erreichen, die mit denen von Direktumrichtern mit verketteter Schaltung vergleichbar ist, muß daher bei Direktumrichtern mit offener Schaltung die von dem Transformator bereitzustellende Versorgungsspannung erhöht werden.

Trotzdem ergibt sich bei Direktumrichtern mit offener Schaltung ein weiterer Nachteil, wenn aufgrund von Lastanforderungen, beispielsweise im Hinblick auf die Drehmoment-Anregelzeit von Motoren, ein möglichst schneller Stromaufbau gefordert wird. Wenn sich nämlich der sinusförmige Strangspannungsverlauf einer der Lastphasen gerade in der Nahe seines Amplitudenwerts befindet, erreicht die Strangspannung den an den Umrichterausgängen maximal einstellbaren Strangspannungswert, d. h. den Amplitudenwert der von dem Transformator gelieferten Versorgungsspannung, und der Strom in der entsprechenden Lastphase wird nur sehr langsam aufgebaut. Entsprechend verzögert baut sich dann auch das resultierende Drehmoment in dem Motor auf.

Der Erfindung liegt daher die Aufgabe zugrunde, bei einem Direktumrichter mit einer daran in offener Schaltung angeschlossenen Last die Bedienung dynamischer Lastanforderungen zu verbessern.

Gemäß der Erfindung wird die Aufgabe durch einen Direktumrichter mit den Merkmalen des Patentanspruchs 1 gelöst.

Vorteilhafte Weiterbildungen des erfindungsgemäßen Direktumrichters sind den Unteransprüchen zu entnehmen.

Der erfindungsgemäße Direktumrichter zeichnet sich dadurch aus, daß einerseits wegen der offenen Schaltung der Last nur ein vergleichsweise einfacher Transformator zur Stromversorgung erforderlich ist und daß andererseits bei dynamischen Lastanforderungen dieselben Spannungsreserven ausgenutzt werden, wie bei Direktumrichtern mit verketteter Schaltung. Dazu werden bei dynamischer Lastanforderung die Strangspannungen an den Umrichterausgängen unabhängig voneinander so eingestellt, daß sich der aus der geometrischen Summe der Strangspannungen in dem Zeigerdiagramm ergebende Spannungszeiger ohne Veränderung seiner momentanen Phasenlage vergrößert. Damit vergrößern sich auch die entsprechenden Motorströme und das Motormoment. Um Amplituden- und Winkelfehler des resultierenden Spannungszeigers zu vermeiden, wird dieser derart begrenzt, daß er in dem Zeigerdiagramm innerhalb eines Sechsecks liegt, welches der Aussteuerungsgrenze des Direktumrichters bei einer Einstellung der Strangspannungsverläufe in Form von eckigen Trapezen entspricht.

Durch die dynamische Erweiterung der Aussteuergrenzen des dreiphasigen Systems ist der erfindungsgemäße Direktumrichter mit offener Schaltung insbesondere für Antriebe mit hohen Anforderungen an die Regeldynamik, wie z.B. Antriebe von Walzgerüsten geeignet, wobei eine verbesserte Ausnutzung der Transformator- und Umrichterleistung sowie ein verbesserter Leistungsfaktor realisiert werden.

Für die konventionelle verkettete Schaltung mit Sternpunkt gilt zu jedem Zeitpunkt, daß die Summe der Phasenströme gleich Null ist. Bedingt durch Umsteuervorgänge im Umrichter muß in den einzelnen Phasen bei Stromumkehr, d. h. bei jedem Stromnulldurchgang, eine stromlose Pause eingehalten werden. Da auch für diese Zeit gilt, daß die Summe der Phasenströme Null ist, führt dies dazu, daß der aus der geometrischen Summe der Istwerte der Phasenströme resultierende Stromzeiger nahezu stehenbleibt. Hieraus ergibt sich eine Regelabweichung zu den Sollwerten der Phasenströme, die nach Beendigung der stromlosen Pause wieder ausgeregelt werden muß. Dies führt dazu, daß der Umlauf des Stromzeigers nicht kontinuierlich ist, so daß es zu Welligkeiten im Drehmomentenverlauf des Motors kommt.

Bei der offenen Schaltung ist die Summe der Phasenströme nicht zwangsweise Null. Es muß zwar auch hier eine stromlose Pause bei Stromnulldurchgängen in den einzelnen Phasen eingehalten werden, jedoch sind die Ströme in den beiden anderen Phasen frei einstellbar. Im Rahmen der Erfindung ist vorgesehen, daß korrigierend auf die Sollwerte der frei einstellbaren Phasenströme eingegriffen wird, so daß der resultierende Stromzeiger der Istwerte der Phasenströme nicht stehenbleibt, sondern kontinuierlich und mit konstanter Winkelgeschwindigkeit weiterläuft. Dadurch wird eine Welligkeit im Drehmomentenverlauf des Motors vermieden.

Zur weiteren Erläuterung der Erfindung wird im folgenden auf die Figuren der Zeichnung Bezug genommen; im einzelnen zeigen

FIG 1         ein Beispiel für einen Direktumrichter mit einer dreiphasigen Last in offener Schaltung,

FIG 2 bis 4   Diagramme mit den Strangspannungsverläufen an den einzelnen Lastphasen bei Sinussteuerung und Trapezsteuerung,

FIG 5         einer Zeigerdiagramm der Strangspannungen mit den Aussteuergrenzen des Direktumrichters,

FIG 6         ein Zeigerdiagramm der Strangspannungen mit einem Beispiel zur Erzeugung eines vergrößerten resultierenden Spannungszeigers bei dynamischer Lastanforderung,

FIG 7         ein Zeigerdiagramm der Strangspannungen mit einem Beispiel für die Begrenzung des resultierenden Spannungszeigers,

FIG 8         ein Beispiel für eine Steuereinrichtung zur Steuerung des Direktumrichters,

FIG 9         ein Beispiel für die Phasenstromverläufe bei einem Umrichter mit konventioneller verketteter Schaltung und

FIG 10        ein Beispiel für die Phasenverläufe bei erfindungsgemäßem Direktumrichter mit offener Schaltung.

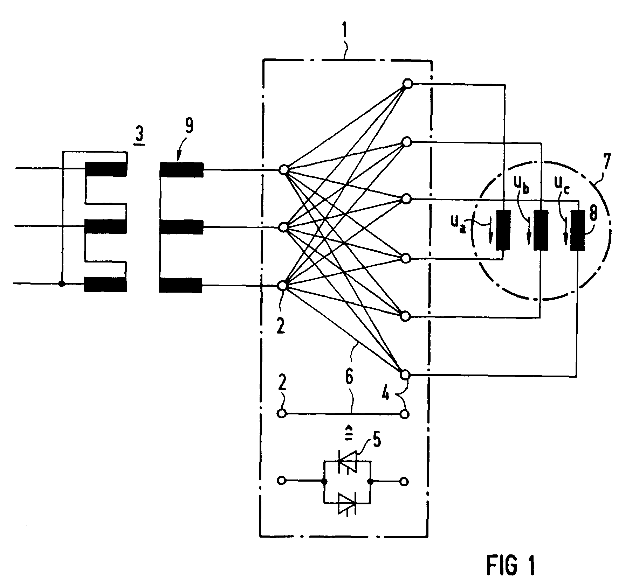

FIG 1 zeigt einen Direktumrichter 1, der über drei Umrichtereingänge 2 an einem Dreiphasentransformator 3 angeschlossen ist. Der Direktumrichter 1 weist sechs Umrichterausgänge 4 auf, von denen jeder Umrichterausgang 4 über jeweils einen von zwei antiparallelen Thyristoren 5 gebildeten Ventilzweig 6 mit jedem der Umrichtereingänge 2 verbunden ist. An den Umrichterausgängen 4 ist eine dreiphasige Last 7, hier ein Motor, in offener Schaltung angeschlossen, wobei jede Lastphase 8 mit jeweils zwei Umrichterausgangen 4 verbunden ist, ohne daß irgendwelche Umrichterausgänge 4 galvanisch miteinander verbunden sind und dabei einen Sternpunkt bilden. Dadurch ist es möglich, daß der Transformator 3 lediglich ein einziges dreiphasiges Sekundärwicklungssystem 9 aufweist, während bei einer sogenannten verketteten Schaltung der Lastphasen, also einer Schaltung mit Sternpunkt, für die Stromversorgung jeder einzelnen Lastphase jeweils ein eigenes Sekundärwicklungssystem des Transformators erforderlich wäre.

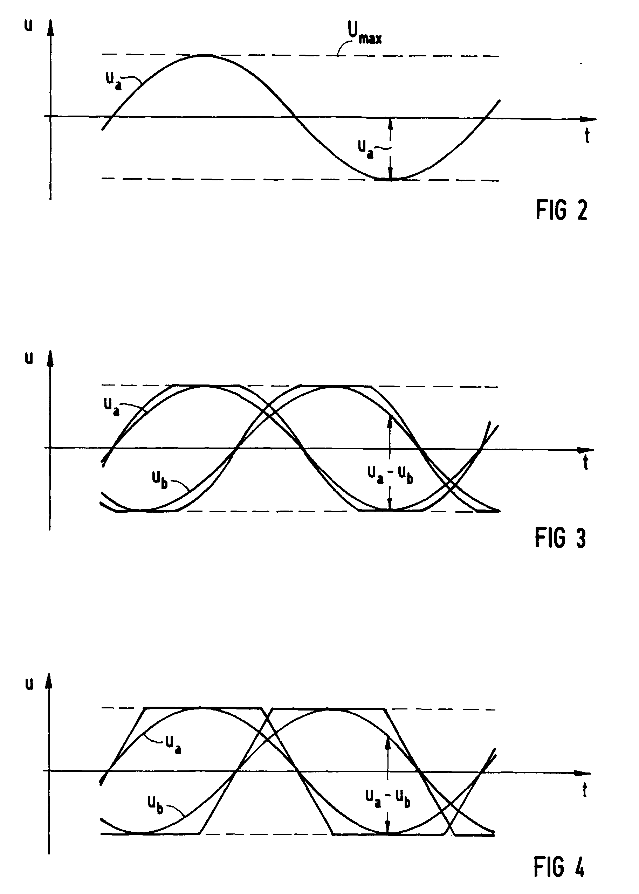

Der Direktumrichter 1 mit offener Schaltung wird im stationären Betrieb mit sinusförmiger Spannungssteuerung angesteuert, so daß an jeder Lastphase 8 unter Annahme unendlicher Pulsigkeit ein sinusförmiger Verlauf der Strangspannung erzeugt wird. FIG 2 zeigt den sinusförmigen Strangspannungsverlauf $u_a$ an einer der Lastphasen 8. Durch die sinusförmige Spannungssteuerung wird erreicht, daß in der Last 7 keine gleichphasigen Oberwellenströme, insbesondere der dritten Harmonischen, fließen, die den Direktumrichter 1 nur unnötig belasten und nicht zur Erhöhung der Nutzleistungsabgabe an der Last 7 beitragen. Wie FIG 2 zeigt, stößt die Strangspannung $u_a$ beim Erreichen ihres Amplitudenwertes $U_a$ an den maximal einstellbaren Strangspannungswert $U_{max}$, der dem Amplitudenwert der von dem Transformator 3 gelieferten Spannung entspricht. Wenn zu diesem Zeitpunkt aufgrund einer Lastanforderung, beispielsweise einer schnellen Erhöhung des Drehmoments des Motors 7, ein möglichst schneller Stromaufbau in den Lastphasen 8 gefordert wird, kann die sich in der Nähe des maximal einstellbaren Strangspannungswertes $U_{max}$ befindende Strangspannung hierzu nicht beitragen. Daher kann der Strom in der entsprechenden Lastphase 8 nur sehr langsam aufgebaut werden. Entsprechend verzögert baut sich dann auch das resultierende Drehmoment in dem Motor 7 auf.

Wie FIG 3 zeigt, ergeben sich bei einem Direktumrichter mit verketteter Schaltung und sinusförmiger Spannungssteuerung noch deutliche Reserven zur Erhöhung der verketteten Spannung $u_a$-$u_b$, die durch eine Spannungssteuerung mit abgerundeter Trapezform ausgenutzt wird. Diese Art der trapezförmigen Spannungssteuerung erfolgt bei Direktumrichtern mit verketteter Schaltung üblicherweise auch im stationären Betrieb, weil die sich dabei ergebende verkettete Spannung einen sinusförmigen Verlauf annimmt.

Wie FIG 4 zeigt, könnte die durch sinusförmige Spannungssteuerung des Direktumrichters mit verketteter Schaltung erhaltene verkettete Spannung $u_a$-$u_b$ durch eine Spannungssteuerung mit eckiger Trapezform noch weiter erhöht werden, wobei jedoch auch die resultierende verkettete Spannung nicht mehr sinusförmig, sondern trapezförmig verlaufen würde.

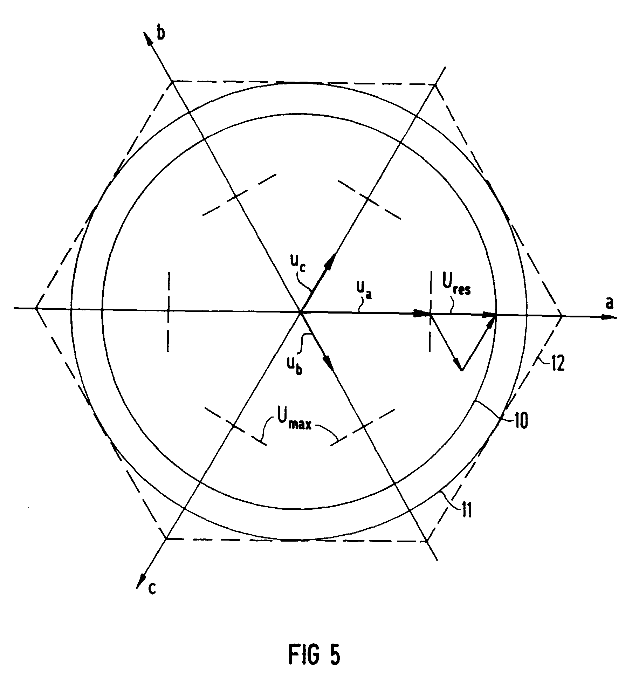

In FIG 5 ist ein Zeigerdiagramm für die Strangspannungen $u_a$, $u_b$ und $u_c$ an den einzelnen Lastphasen 8 der in offener Schaltung an dem Direktumrichter 1 angeschlossenen Last 7 dargestellt. Die um 120° versetzten Achsen der Strangspannungen sind entsprechend mit a, b und c bezeichnet. An jeder der Achsen a, b und c sind die Grenzen der maximal einstellbaren Strangspannung $U_{max}$ angegeben. Aus der geometrischen Summe der Strangspannungen $u_a$, $u_b$ und $u_c$ ergibt sich ein resultierender Spannungszeiger $U_{res}$, dessen Ortskurve bei sinusförmiger Spannungssteuerung entsprechend FIG 2 durch den inneren Kreis 10 um den Schnittpunkt der drei Achsen a, b und c gebildet wird. Der in FIG 5 gezeigte resultierende Spannungszeiger $U_{res}$ ergibt sich zu dem Zeitpunkt, wenn die Strangspannung $u_a$ ihren der Spannungsgrenze $U_{max}$ entsprechenden positiven Amplitudenwert aufweist und die beiden anderen Strangspannungen $u_b$ und $u_c$ jeweils ihren halben negativen Amplitudenwert haben. Der äußere Kreis 11 bezeichnet die Ortskurve des resultierenden Spannungszeigers $U_{res}$, wenn für den Verlauf der Strangspannungen $u_a$, $u_b$ und $u_c$ die in FIG 3 gezeigte abgerundete Trapezform eingestellt wird. Bei Steuerung der Strangspannungen $u_a$, $u_b$ und $u_c$ entsprechend dem in FIG 4 gezeigten eckigen Trapezverlauf, ergibt sich für den resultierenden Spannungszeiger $U_{res}$ eine sechseckförmige Ortskurve 12.

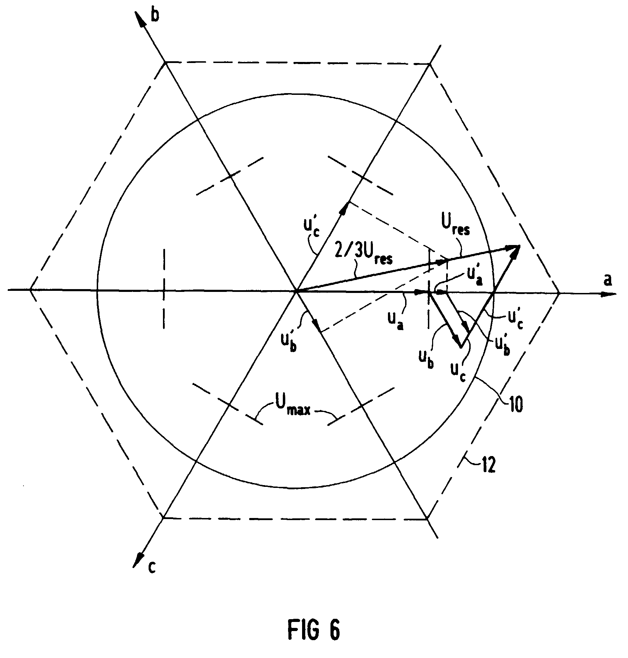

Wie FIG 6 zeigt, werden bei dynamischer Lastanforderung die Strangspannungen $u_a$, $u_b$ und $u_c$ an den Umrichterausgängen 4 des in FIG 1 gezeigten Direktumrichters unabhängig voneinander vorübergehend so eingestellt, daß sich der in dem Zeigerdiagramm ergebende Spannungszeiger $U_{res}$ ohne Veränderung seiner momentanen Phasenlage über die Begrenzung der Ortskurve 10 für die sinusförmige Spannungssteuerung hinaus vergrößert. Dazu werden zunächst aus dem vorgegebenen Soll-Spannungszeiger $U_{res}$ Werte $u_a'$, $u_b'$ und $u_c'$ für die drei Strangspannungen bestimmt, die den Projektionen des mit zwei Drittel multiplizierten Soll-Spannungszeigers $U_{res}$ auf die drei Achsen a, b und c der Strangspannungen in dem Zeigerdiagramm entsprechen. Wenn einer der Werte $u_a'$, $u_b'$ oder $u_c'$, hier der Wert $u_a'$, den maximal einstellbaren Strangspannungswert $U_{max}$ um einen Betrag d überschreitet, wird der betreffende Wert $u_a'$ auf den maximalen Strangspannungswert $U_{max}$ begrenzt, wobei gleichzeitig die Werte $u_b'$ und $u_c'$ für die beiden anderen Strangspannungen um denselben Betrag d vergrößert werden. Es gilt also $u_a = U_{max}$, $u_b = u_b' + d$ und $u_c = u_c' + d$. Die Strangspannungen an den Umrichterausgängen 4 werden auf die so erhaltenen Werte $u_a$, $u_b$ und $u_c$ eingestellt, so daß sich der Spannungszeiger $U_{res}$ ergibt.

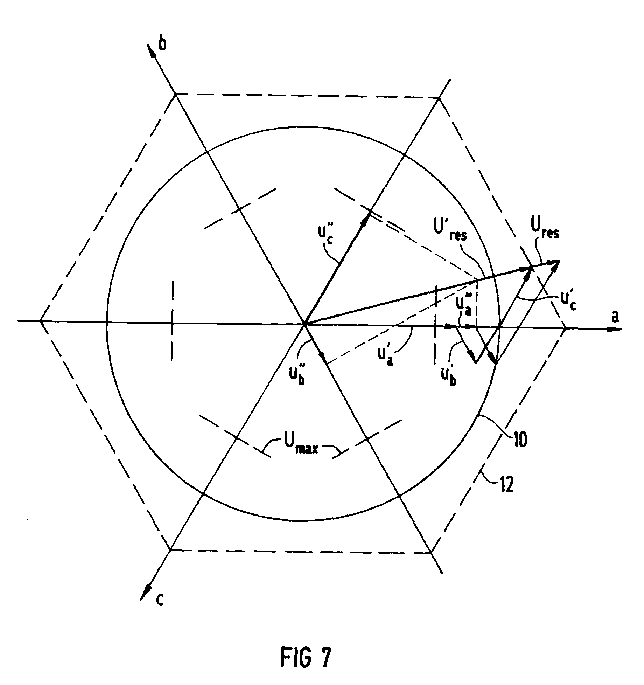

Solange sich der Soll-Spannungszeiger $U_{res}$ innerhalb der sechseckförmigen Ortskurve 12 befindet, kann er über die Strangspannungen $u_a$, $u_b$ und $u_c$ innerhalb der durch den maximal einstellbaren Strangspannungswert $U_{max}$ vorgegebenen Grenzen eingestellt werden. Wenn, wie FIG 7 zeigt, durch die Steuerung ein Soll-Spannungszeiger $U_{res}$ vorgegeben wird, der die sechseckförmige Ortskurve 12 überschreitet, so ist es erforderlich, diesen auf Werte entlang der sechseckförmigen Ortskurve 12 zu begrenzen, um Amplituden- und Winkelfehler zu vermeiden. Zunächst werden für den Soll-Spannungszeiger $U_{res}$ in gleicher Weise, wie dies anhand von FIG 6 erläutert wurde, Werte $u_a''$, $u_b''$ und $u_c''$ für die drei Strangspannungen bestimmt, die den Projektionen des mit zwei Drittel multiplizierten Soll-Spannungszeigers $U_{res}$ auf die drei Achsen a, b und c des Zeigerdiagramms entsprechen. Anschließend werden alle Werte $u_a''$, $u_b''$ und $u_c''$ proportional um jeweils denselben Faktor verringert, wobei sich die Werte $u_a'$, $u_b'$ und $u_c'$ ergeben. Dabei ergibt sich z.B. für den Strang a die Begrenzung mit

$$u_a'/U_{max} = \pm(4/3)/(1+(1/3)\cdot abs((u_b''-u_c''/u_a''))).$$

Wenn einer der so erhaltenen Werte $u_a'$, $u_b'$ und $u_c'$ den maximal einstellbaren Strangspannungswert $U_{max}$ überschreitet, werden die Werte $u_a'$, $u_b'$ und $u_c'$ auf dieselbe Weise korrigiert, wie dies am Beispiel von FIG 6 beschrieben worden ist.

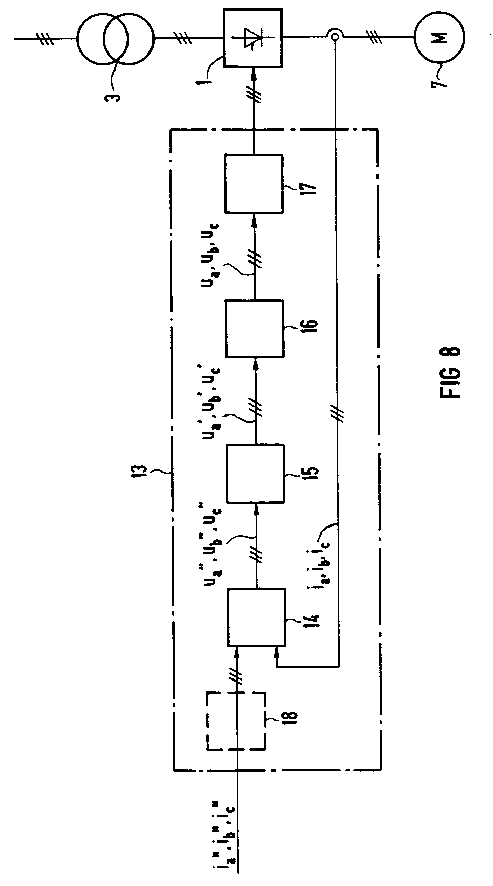

FIG 8 zeigt ein Beispiel für eine Steuereinrichtung 13 zur Steuerung des Direktumrichters 1, der hier vereinfacht mit dem Transformator 3 und dem in offener Schaltung an dem Direktumrichter 1 angeschlossenen Motor 7 dargestellt ist. Die Steuereinrichtung 13 enthält einen Stromregler 14, der in Abhängigkeit von den Regelabweichungen zwischen den Sollwerten $i_a^*$, $i_b^*$ und $i_c^*$ und den Istwerten $i_a$, $i_b$ und $i_c$ der Motorströme Werte $u_a''$, $u_b''$ und $u_c''$ für die Strangspannungen bestimmt, die im stationären Betrieb des Direktumrichters 1 einen sinusförmigen Verlauf aufweisen. Bei dynamischen Lastanforderungen werden diese Werte vorübergehend so eingestellt, daß der sich aus ihrer geometrischen Summe ergebende Soll-Spannungszeiger bei unveränderter Phasenlage vergrößert wird. In dem Schaltungsblock 15 werden die Werte $u_a''$, $u_b''$ und $u_c''$ entsprechend den im Zusammenhang mit FIG 7 erläuterten Verfahrensschritten auf die Werte $u_a'$, $u_b'$ und $u_c'$ begrenzt, so daß der resultierende Soll-Spannungszeiger innerhalb der sechseckförmigen Aussteuerungsgrenze 12 zu liegen kommt. In einem nächsten Schaltungsblock 16 werden die Werte $u_a'$, $u_b'$ und $u_c'$ gemäß den im Zusammenhang mit FIG 6 erläuterten Verfahrensschritten auf die Werte $u_a$, $u_b$ und $u_c$ korrigiert und anschließend einem Steuersatz 17 zur Steuerung des Direktumrichters 1 übergeben.

Wenn es zu einer Begrenzung einer der Strangspannungen auf den maximal einstellbaren Strangspannungswert $U_{max}$ kommt, so wie dies in FIG 6 für die Strangspannung $u_a$ gezeigt ist, kann es geschehen, daß die Regeldifferenz am Eingang des Stromreglers 14 zwischen dem Sollwert $i_a^*$ und dem Istwert $i_a$ des zugehörigen Strangstromes wegen der Begrenzung der Strangspannung $u_a$ nicht ausgeregelt werden kann. In diesem Fall ist vorgesehen, daß die Sollwerte $i_b^*$ und $i_c^*$ der beiden anderen Strangströme um den Betrag der Regeldifferenz $i_a^*-i_a$ angehoben werden, um ein Gegensteuern des Stromreglers 14 zu vermeiden.

Wie bereits erwähnt, werden die Strangspannungen $u_a$, $u_b$ und $u_c$ im stationären Betrieb des Direktumrichters 1 so gesteuert, daß sie einen sinusförmigen Verlauf aufweisen. Dabei erfolgt in dem Stromregler 14 die Stromregelung so, daß gilt $i_a+i_b+i_c = 0$. Während der geschilderten Bedienung der dynamischen Lastanforderung wird diese Bedingung aufgehoben und es wird für die Strangströme ein Nullsystem zugelassen.

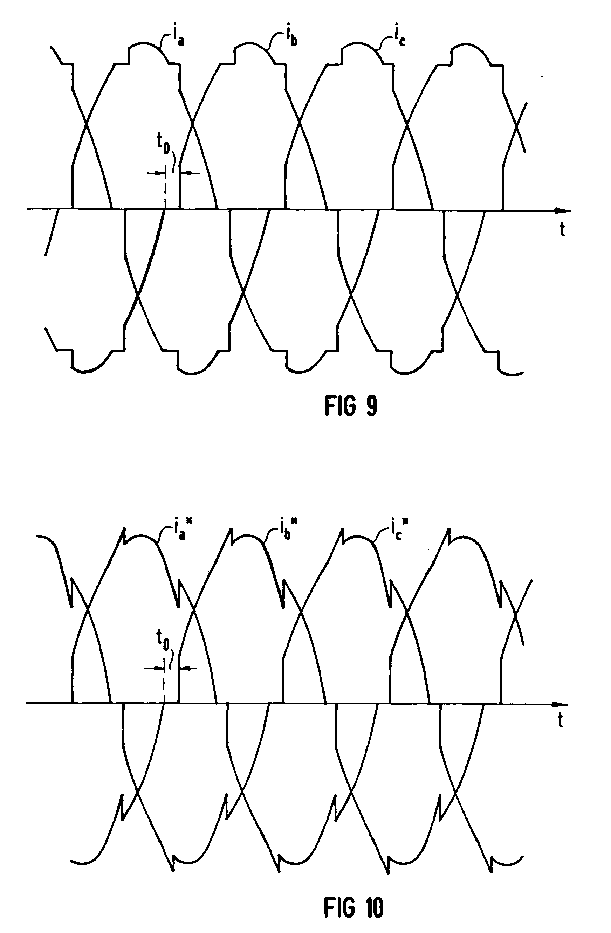

FIG 9 zeigt den prinzipiellen Verlauf der Phasenströme $i_a$, $i_b$ und $i_c$ bei einer konventionellen verketteten Schaltung mit Sternpunkt, für die zu jedem Zeitpunkt die Bedingung $i_a+i_b+i_c = 0$ erfüllt ist. Bedingt durch Umsteuervorgänge im Umrichter muß in jeder einzelnen Phase bei Stromumkehr, d. h. Stromnulldurchgang, eine stromlose Pause $t_o$ eingehalten werden. Auch für diese Zeit $t_o$ gilt $i_a+i_b+i_c = 0$. Dies hat zur Folge, daß der aus der geometrischen Summe der Phasenströme $i_a$, $i_b$ und $i_c$ resultierende Stromzeiger nahezu stehenbleibt. Da der entsprechende Stromzeiger der Sollwerte $i_a^*$, $i_b^*$ und $i_c^*$ weiterläuft, ergibt sich eine Regelabweichung, die am Ende der stromlosen Pause $t_o$ wieder ausgeregelt werden muß, wobei die Übergangsverläufe hier nicht dargestellt sind. Der Umlauf des Stromzeigers ist daher nicht stetig und es kommt zu Welligkeiten im Drehmomentenverlauf des umrichtergespeisten Motors.

FIG 10 zeigt im Unterschied zu FIG 9 den Soll-Verlauf der Phasenströme $i_a^*$, $i_b^*$ und $i_c^*$ bei der in FIG 1 gezeigten offenen Direktumrichterschaltung. Auch hier muß bei jedem Stromnulldurchgang eine stromlose Pause $t_o$ eingehalten werden, jedoch gilt, wie oben bereits erläutert, für dynamische Vorgänge die Bedingung $i_a+i_b+i_c = 0$ nicht. Daher werden die Sollwerte $i_a^*$, $i_b^*$ und $i_c^*$ während der stromlosen Pause $t_o$ derart korrigiert, daß der aus der geometrischen Summe der Istwerte $i_a$, $i_b$ und $i_c$ resultierende Winkelgeschwindigkeit weiterläuft. Hierzu werden die Sollwerte $i_a^*$, $i_b^*$ und $i_c^*$ während der Dauer der stromlosen Pause $t_o$ entsprechend vorgesteuert, wodurch die Welligkeit im Drehmomentenverlauf des Motors 7 verringert wird. Diese Vorsteuerung erfolgt in einer, in FIG 8 gestrichelt dargestellten Korrektureinrichtung 18.

**Patentansprüche**

1. Direktumrichter mit drei Umrichtereingängen (2) für eine dreiphasige Versorgungsspannung und mit Umrichterausgängen (4), an denen eine dreiphasige Last (7), insbesondere ein Motor, in offener Schaltung angeschlossen ist,

   - wobei die Umrichterausgänge (4) nur über die Last (7) miteinander verbunden sind,

   - wobei der Direktumrichter (1) eine Steuereinrichcung (13) zur Einstellung vorgegebener Strangspannungsverläufe ($u_a'$, $u_b'$ und $u_c'$) an den einzelnen Lastphasen (8) aufweist,

   - wobei sich ein wirksamer Spannungszeiger ($U_{res}$) aus der geometrischen Addition der Spannungsverläufe der einzelnen Phasen ergibt,

   - wobei die Steuereinrichtung (13) bei dynamischer Lastanforderung den Direktumrichter (1) vorübergehend derart ansteuert, daß sich der Betrag der Spannung ($u_a'$, $u_b'$ und $u_c'$) gegenüber dem sich aus einem Sinusverlauf der Strangspannungen ($u_a'$, $u_b'$ und $u_c'$) ergegenden Betragswert der Strangspannungen ($u_a'$, $u_b'$ und $u_c'$) vergrößert, so daß der aus der geometrischen Summe der Strangspannungen ($u_a'$, $u_b'$ und $u_c'$) resultierende wirksame Spannungszeiger ($U_{res}$) bei unveränderter Phasenlage gegenüber dem sich aus einem Sinusverlauf der Strangspannungen ($u_a'$, $u_b'$ und $u_c$) ergebenden resultierenden wirksamen Spannungszeigers vergrößert wird,

   - und wobei sich bei einer zu großen Erhöhung des Betrags der Spannung ($u_a'$, $u_b'$ und $u_c'$) gegenüber dem sich aus einem Sinusverlauf der Strangspannungen ($u_a'$, $u_b'$ und $u_c'$) ergebenden Betragswert der Strangspannungen sich eine Oberschwingung in den Lastströmen mit einer Frequenz gemäß der dreifachen Grundfrequenz des Lastdrehstromsystems ausbildet.

2. Dirktumrichter nach Anspruch 1,
   **dadurch gekennzeichnet,**
   daß die Steuereinrichtung (13) die Stranpspannungen ($u_a'$, $u_b'$ und $u_c'$) gemäß einem trapezähnlichen Verlauf über die Zeit einstellt, so daß sich eine Oberschwingung in den Lastströmen mit einer Frequenz gemäß der dreifachen Grundfrequenz des Lastdrehstromsystems ausbildet.

3. Direktumrichter nach Anspruch 1 oder 2,
   **dadurch gekennzeichnet,**
   daß die Steuereinrichtung (13) des Direktumrichters die Oberschwingungen in den drei Lastströmen nach Abklingen der dynamischen Lastanforderungen unterdrückt.

**Claims**

1. Direct converter having three converter inputs (2) for a three-phase power supply voltage and having converter outputs (4) to which a three-phase load (7), in particular a motor, is connected in open circuit,

   - whereby the converter outputs (4) are connected to each other only via the load (7),

- whereby the direct converter (1) has a control device (13) for setting given phase voltage characteristics ($u_a'$, $u_b'$ and $u_c'$) in the individual load phases (8),
- whereby an effective voltage vector ($U_{res}$) is produced from the geometric addition of the voltage characteristics of the individual phases,
- whereby the control device (13) with dynamic load requirement triggers the direct converter (1) temporarily in such a way that the amount of the voltage ($u_a'$, $u_b'$ and $u_c'$) compared with the absolute value of the phase voltages ($u_a'$, $u_b'$ and $u_c'$) resulting from a sinusoidal characteristic of the phase voltages ($u_a'$, $u_b'$ and $u_c'$) increases such that the effective voltage vector ($U_{res}$) resulting from the geometric sum of the phase voltages ($u_a'$, $u_b'$ and $u_c'$) with unchanged phase relation is increased compared with the resulting effective voltage vector produced from a sinusoidal characteristic of the phase voltages ($u_a'$, $u_b'$ and $u_c'$),
- and whereby with too great an increase of the amount of the voltage ($u_a'$, $u_b'$ and $u_c'$) compared with the absolute value of the phase voltages resulting from a sinusoidal characteristic of the phase voltages ($u_a'$, $u_b'$ and $u_c'$) a harmonic oscillation forms in the load currents with a frequency corresponding to three times the fundamental frequency of the load three-phase current system.

2. Direct converter according to claim 1, characterized in that the control device (13) sets the phase voltages ($u_a'$, $u_b'$ and $u_c'$) according to a trapezoid-similar characteristic over time so that a harmonic oscillation forms in the load currents with a frequency corresponding to three times the fundamental frequency of the load three-phase current system.

3. Direct converter according to claim 1 or 2, characterized in that the control device (13) of the direct converter suppresses the harmonic oscillations in the three load currents after the dynamic load requirements have died down.

**Revendications**

1. Convertisseur direct de courant alternatif ayant trois entrées de convertisseur (2) pour une tension d'alimentation triphasée et ayant des sorties de convertisseur (4), auxquelles une charge triphasée (7), notamment un moteur, est raccordée en circuit ouvert,

- dans lequel les sorties de convertisseur (4) sont reliées entre elles seulement par l'intermédiaire de la charge (7),

- dans lequel le convertisseur direct (1) comporte un dispositif de commande (13) destiné au réglage de courbes prédéterminées de tensions de phases ($u_a'$, $u_b'$ et uc') sur les différentes phases de charge (8),
- dans lequel un vecteur de tension efficace (Ures) résulte de l'addition géométrique des courbes de tensions des différentes phases,
- dans lequel le dispositif de commande (13) commande le convertisseur direct (1) temporairement lors d'une sollicitation dynamique de charge de manière à augmenter la valeur de la tension ($u_a'$, $u_b'$ et uc') par rapport à la valeur des tensions de phases ($u_a'$, $u_b'$ et uc') résultant d'une courbe sinusoïdale des tensions de phases (ua', ub' et uc') de telle sorte que le vecteur de tension efficace (Ures) résultant de la somme géométrique des tensions de phases (ua', ub' et uc') augmente, sans changer la relation de phase, par rapport au vecteur de tension efficace résultant d'une courbe sinusoïdale des tensions de phases ($u_a'$, $u_b'$ et $u_c'$),
- et dans lequel, lors d'une trop grande augmentation de la valeur de la tension ($u_a'$, $u_b'$ et $u_c'$) par rapport à la valeur des tensions de phases résultant d'une courbe sinusoïdale des tensions de phases ($u_a'$, $u_b'$ et uc'), un harmonique se forme dans les courants de charge avec une fréquence correspondant au triple de la fréquence fondamentale du système de courant triphasé de charge.

2. Convertisseur direct selon la revendication 1, caractérisé par le fait que le dispositif de commande (13) règle les tensions de phases ($u_a'$, $u_b'$ et $u_c'$) selon une courbe trapézoïdale en fonction du temps de telle sorte qu'un harmonique se forme dans les courants de charge avec une fréquence correspondant au triple de la fréquence fondamentale du système de courant triphasé de charge.

3. Convertisseur direct selon la revendicaticn 1 ou 2, caractérisé par le fait que le dispositif de commande (13) du convertisseur direct supprime les harmoniques dans les trois courants de charge après la disparition des sollicitations dynamiques de charge.

FIG 1

FIG 2

FIG 3

FIG 4

FIG 5

FIG 6

FIG 7

FIG 8

FIG 9

FIG 10